# EUROPEAN PATENT SPECIFICATION

(11) **EP 0 428 329 B1**
(45) Date of publication and mention of the grant of the patent: **07.02.1996**
(21) Application number: 90312208.3
(22) Date of filing: 08.11.1990
(51) Int. Cl.: G06F 12/06, G06F 12/02

(54) **Extended addressing circuitry**
Schaltungsanordnung zur erweiterten Adressierung
Circuit d'adressage étendu

(30) Priority: 13.11.1989 US 434647
(43) Date of publication of application: 22.05.1991
(73) Proprietor: International Business Machines Corporation, Armonk, N.Y. 10504 (US)
(72) Inventor: Padgett, Russell Stephen, Royal Palm Beach, Florida 33411 (US); Chisholm, Douglas Roderick, Delray Beach, Florida 33445 (US); Garcia, Serafin Jose Eleazar,Jr., Boynton Beach, Florida 33436 (US); Alvarez, Rafael, Boca Raton, Florida 33486 (US); Kalman, Dean Alan, Lantana, Florida 33462 (US); Yoder, Robert Dean, Delray Beach, Florida 33484 (US)
(74) Representative: Burt, Roger James, Dr.

(56) References cited:
- EP-A- 0 014 581
- EP-A- 0 194 696
- GB-A- 2 112 186
- US-A- 4 346 441
- Computer Design, vol. 20, no. 10, October 1981, pages 179-180, 182, 184, Winchester, MA, US; W.S. ANG: "Common element key to multiprocessor architcture"

## Description

This invention relates to extended addressing circuitry that permits segments of memory associated with a second address/data bus to be accessed from a first address/data bus.

I/O adapter cards for certain prior art personal computer systems have included a plurality of registers referred to as Programmable Option Select (POS) registers. Each adapter card plugged into the main processor bus is connected to a unique Card Setup line on the main bus, and the POS registers can only be accessed when the Card Setup line for that adapter is active. The number of POS registers is limited, typically to eight (8), and it would be desirable if this number could be increased. Furthermore, when the adapter card is intelligent, i.e., when it includes its own processor, address/data bus and associated memory, it would be advantageous if some of the memory associated with the adapter card bus could be accessed through the POS registers.

Accordingly, the present invention enables a large segment of the memory associated with the adapter card to be accessed through the POS registers by using extended addressing, or sub-addressing. This large segment may be placed anywhere within the address space associated with the adapter card bus. The invention can also provide for auto-incrementing, such that sequential addresses within this segment of memory can be easily and quickly accessed.

Briefly, the invention provides an extended addressing circuit for use with first and second address/data buses having, respectively, first and second addressable memory spaces associated therewith. The extended addressing circuit includes first and second registers wherein the first register is capable of storing values of data that lie within first, second and third non-overlapping ranges. Included is a means for accessing the second register from the first bus in response to a first address signal on the first bus. The means for accessing the second register is enabled in response to a first predetermined value of data stored in the first register. This first predetermined value lies within the first range of values. Data may be transferred between the second register and the first bus when the second register is so accessed. Also included is a means for selecting a first segment of the second memory space. The base address of the first segment corresponds to the data stored in the second register. The selecting means is enabled in response to a value of data stored in said first register that lies within said second range, and to said first address signal. Furthermore, a means for accessing a selected address of the first segment of the second memory space in response to the first address signal on the first bus is also provided. The address of the selected address within the first segment corresponds to the data stored in the first register. The means for accessing the selected address of the first segment is enabled in response to a value of data stored in the first register that lies within the second range, such that data may be transferred between the selected address and the first bus when the selected address is so accessed.

The invention further provides an adapter card circuit having extended addressing capability. The adapter card circuit is for use in a computer having a first address/data bus which has a first memory space associated therewith. The adapter card circuit includes a second address/data bus which has a second memory space associated therewith. A memory is coupled to the second bus and the memory is addressable within the second memory space. Means for transferring data between the first and second buses is coupled to the data bus of the second bus. Included are first and second registers wherein the first register is capable of storing values of data that lie within first, second and third non-overlapping ranges. Also included is a means for accessing the second register from the first bus in response to a first address signal on the first bus. The means for accessing the second register is enabled in response to a first predetermined value of data stored in the first register. This first predetermined value lies within the first range of values. Data may be transferred between the second register and the first bus when the second register is so accessed. Also included is a means for selecting a first segment of the second memory. The base address of the first segment corresponds to the data stored in the second register. Said selecting means is enabled in response to a value of data stored in said first register that lies within said second range, and to said first address signal. Furthermore, a means for accessing a selected address of the first segment of the second memory in response to the first address signal on the first bus is also provided. The address of the selected address within the first segment corresponds to the data stored in the first register. The means for accessing the selected address of the first segment is enabled in response to a value of data stored in the first register that lies within the second range, such that data may be transferred between the selected address and the first bus when the selected address is so accessed.

Accordingly the invention further provides an adapter card comprising the above extended addressing circuitry.

The invention also provides a computer system comprising first and second address data bases having respectively, first and second addressable memory spaces associated therewith and extended addressing circuitry as described above.

The invention will be further described in the following description of an embodiment thereof, and the accompanying drawings, wherein
Figs. 1A and 1B are a schematic diagram of an embodiment of the invention; and
Fig. 2 is a schematic diagram of the POS7 and POS6 registers of Fig. 1A.

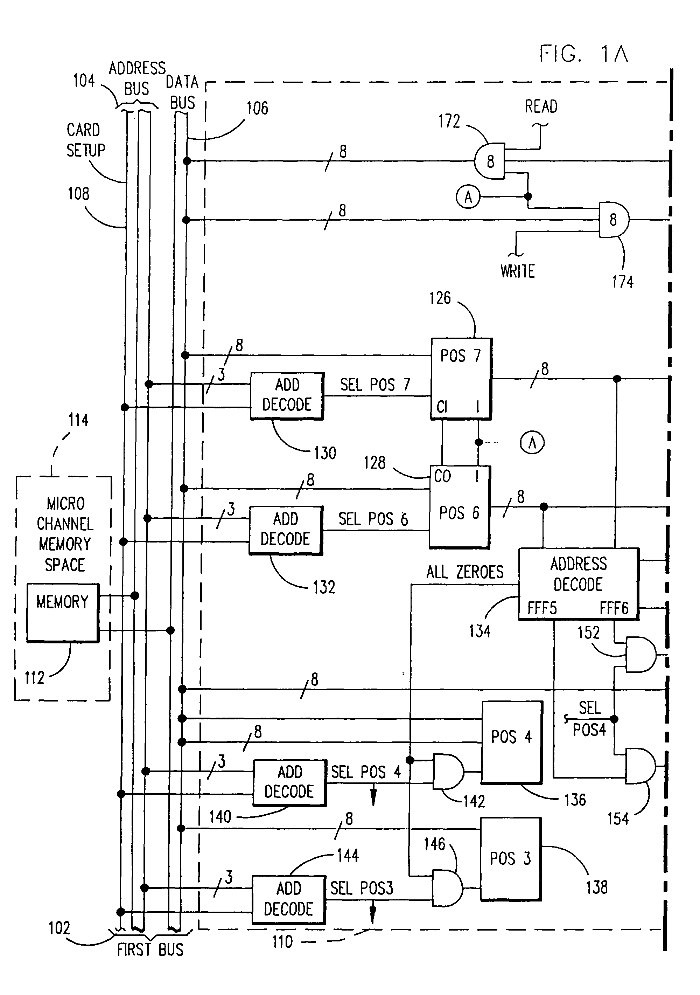

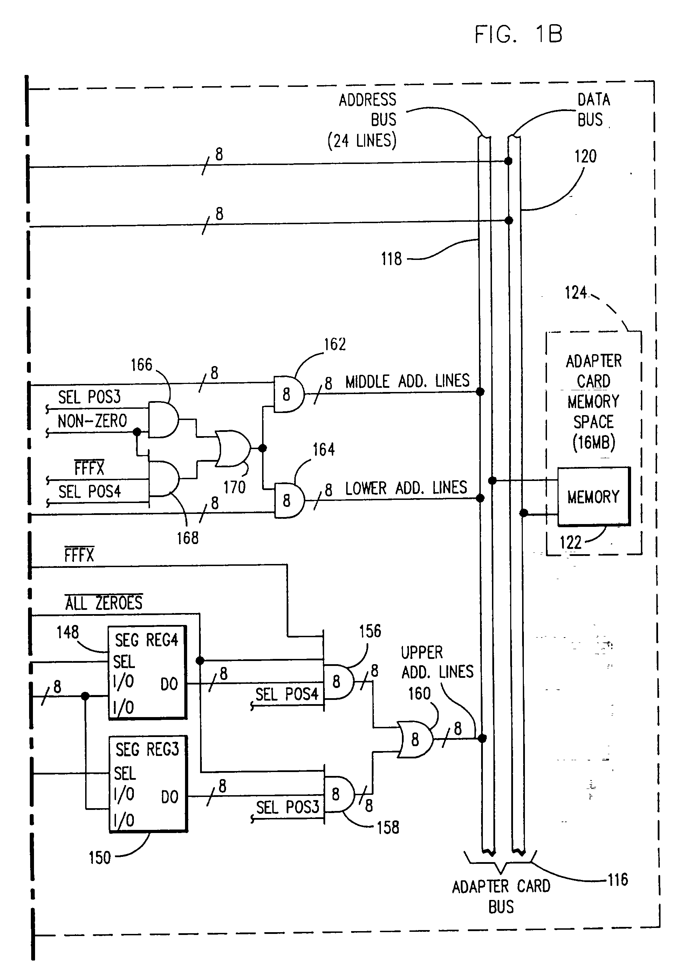

Referring to Figs. 1A and 1B, a first address/data bus 102 includes an address bus 104 and a data bus 106. The address bus also includes a line 108 called "Card Setup". First bus 102 is adapted to receive adapter cards 110, which can be plugged into first bus 102. Although only one Card Setup line 108 is illustrated in the figure, the first bus actually includes a separate Card Setup line for each adapter card plugged into the first bus. First bus 102 is typically the main bus of a personal computer. A first memory 112 is coupled to the bus and is addressable within the "memory space" 114 of the first bus; the memory space including all memory locations or addresses that can be directly addressed from the bus. The adapter card includes a second address/data bus 116, which also includes an address bus 118 and a data bus 120. A second memory 122 is coupled to second bus 116 and this memory is addressable within the memory space 124 of the second bus. Both buses 102 and 116 also include conventional, non-illustrated control lines, including READ and WRITE lines.

Two registers labelled POS7 (126) and POS6 (128) (POS stands for "Programmable Option Select") are connected to the data bus 106 of first bus 102, and to the address bus 104 through, respectively, address decoders 130 and 132. Address decoders 130 and 132 are of conventional design and when card setup 108 is active, they decode, respectively, addresses 7 and 6. Consequently, the Card Setup line 108 must be active and the lower three (3) address bits must be equal to 7 for SEL POS7 ("Select POS7") to go active. Similarly, Card Setup must be active and the lower three (3) address bits must equal 6 for SEL POS6 to be active. When each of these registers 126 and 128 are addressed, data can be transferred between the data bus 106 and the registers.

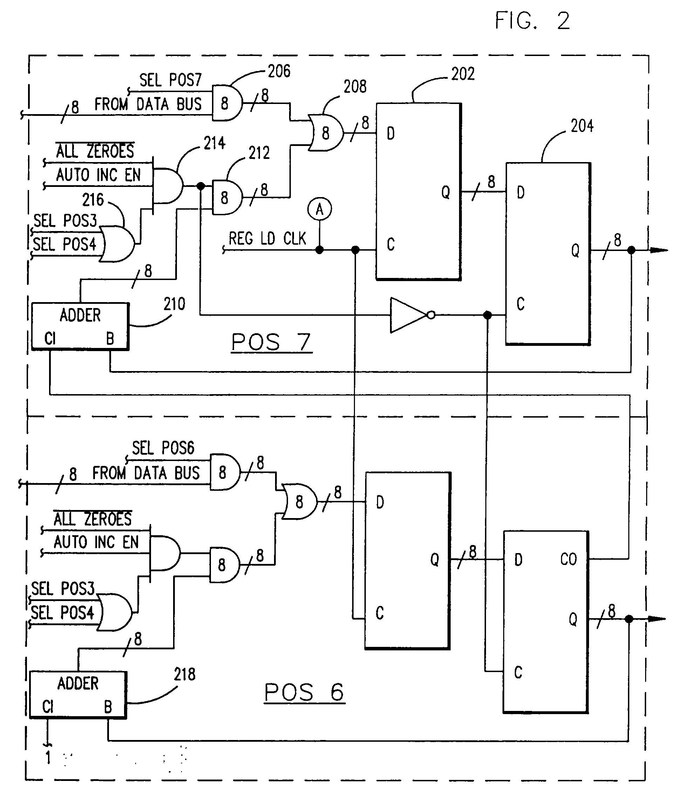

Although POS7 and POS6 can be individually accessed from the first bus, they otherwise function as a single sixteen (16) bit register, which will be referred to as POS7/6. In addition, the data that is stored in POS7/6 will be represented as a four (4) digit hexadecimal number, e.g., FFF6. An "X" in this number indicates a "don't care" state. POS7/6 has an auto-incrementing function. When a pulse occurs at the "I" input of POS6, the register is incremented. When a pulse occurs at the "I" input of POS7 and the "carry out" or "CO" output of POS6 is active, thereby causing the "carry in" or "CI" of POS7 to be active, POS7 is also incremented. POS7 and POS6 are described in greater detail below with regard to Fig. 2.

The data stored in POS7/6 is broken down into three (3) non-overlapping ranges. Specifically, a first range from FFF0 to FFFF, a second range from 0001 to FFEF, and a third range from 0000 to 0000 (i.e., only zero is included in the third range). Address decoder 134 decodes five (5) particular values or ranges of values stored in POS7/6. Specifically, ALL ZEROES (0000 or the third range of values) and its inverse NOT ALL ZEROES, FFF5, FFF6 and NOT FFFX (i.e., not in the first range of values). Address decoder 134 is of conventional design.

Registers POS4 (136) and POS3 (138) are conventional 8 bit data registers that are connected to data bus 106 of first bus 102. POS4 is coupled to address bus 104 through address decoder 140 and AND gate 142, while POS3 is coupled to the first bus through address decoder 144 and AND gate 146. SEL POS4 goes active when the lower three (3) address bits of address bus 104 are equal to 4, and card setup 108 is active. Similarly, SEL POS3 goes active when the lower three (3) address bits are equal to 3 and card setup is active. For POS4 and POS3 to be selected, however, there is an additional constraint that the data stored in POS7/6 must be within the third range, i.e.,0000. Consequently, data can be transferred between either POS4 or POS3 and data bus 106 only when the register is correctly addressed from address bus 104 and POS7/6 contains 0000.

Segment Registers SEG REG4 and SEG REG3 are of conventional design, except that the eight (8) data output lines "DO" are connected directly to the latch outputs of the registers; consequently, they are continuously enabled. The conventional Input/Output lines "I/O" are enabled and disabled through the "SEL I/O" (Select Input/Output) line. Thus, data can only be transferred into and out of the "I/O" port when SEL I/O is active. Since the output of AND gate 152 is connected to the SEL I/O input of SEG REG4, and its inputs are connected to the FFF6 output of Address Decoder 134 and the SEL POS4 output of address decoder 140, the I/O port of SEG REG4 is only enabled when POS4 has been addressed and the value of the data stored in POS7/6 is FFF6. Consequently, SEG REG4 can only be accessed (written to or read from) when POS4 is addressed and the data stored in POS7/6 equals FFF6. Similarly, since the inputs of AND gate 154 are connected to the FFF5 output of decoder 134 and the SEL POS4 line, SEG REG3 can only be accessed when POS4 is addressed and the data stored in POS7/6 equals FFF5. It should be emphasized that both segment registers SEG REG4 and SEG REG3 are accessed by addressing POS4 (i.e., SEG REG3 is not accessed by addressing POS3).

The eight (8) data output (DO) lines of SEG REG4 are coupled through eight (8) AND gates 156 and eight (8) OR gates 160 to the upper eight (8) address lines of the second bus 116 (the numeral "8" in the center of the gate signifies that the gate is repeated eight (8) times, one for each separate line). Since the other three (3) inputs to AND gate 156 are connected to the NOT FFFX and NOT ALL ZEROES outputs of address decoder 134, as well as to SEL POS4, the eight (8) lines output lines of SEG REG 4 are gated onto the eight (8) upper address lines of second bus 116 only when POS4 is addressed and the value of the data stored in POS7/6 is in the second range (0001 to FFEF). The eight (8) lines at the output of SEG REG 4 are used to select a first 64KB segment of memory space 124.

Similarly, two of the inputs to AND gate 158 are connected to the NOT ALL ZEROES output of address decoder 134 and to the SEL POS3 line. Consequently, the eight (8) output lines of SEG REG3 are gated onto the upper eight (8) address lines of second bus 116 when POS3 is addressed and the value of the data stored in POS7/6 lies in either the first or the second range, such that SEG REG3 is used to select a second 64KB segment of second memory space 124.

The eight (8) outputs of POS7 and the eight outputs of POS6 are coupled, respectively, to the eight (8) middle address lines and the eight lower address lines of second bus 116 through AND gates 162 and 164. The second input to AND gates 162 and 164 are coupled to address decoders 134, 140 and 144 through AND gates 166 and 168 and OR gate 170. Consequently, the sixteen (16) outputs of POS7/6 are gated onto the sixteen (16) lower address lines of second bus 116 when either POS4 is addressed and the value of the data stored in POS7/6 is in the second range (0001 to FFEF), or POS3 is addressed and the value of the data stored in POS7/6 is in the first or second range (0001 to FFFF).

Thus, a location in a selected segment of the second memory space can be indirectly accessed from the first bus by loading the appropriate value into POS7/6 and addressing either POS4 or POS3. When a location in the second memory space is so accessed, data is transferred between the memory 122 attached to the second bus 116 (via data bus 120) and the data bus 106 of the first bus 102 through eight (8) AND gates 172 and eight AND gates 174. The lines labeled READ and WRITE are the non-illustrated read and write control lines from the first bus.

To summarize, the segment registers (SEG REG4 and SEG REG3) are used to select two 64KB segments of second memory space 124. The base address of the first segment is loaded into SEG REG4 by storing FFF6 in POS7/6 and then addressing POS4. similarly, the base address of the second segment is loaded into SEG REG3 by storing FFF5 in POS7/6 and then addressing POS4.

Next, a particular location in the first segment of memory 122 is addressed by loading the address of the desired location within the segment into POS7/6 (this address must fall in the range 0001-FFEF) and the selected location is accessed by addressing POS4. Similarly, a particular location in the second segment of memory 122 is addressed by loading the address of the desired location into POS7/6 (this address must fall in the first or second range, i.e., it cannot be zero) and then addressing POS3. After each such access of a location within a segment of the second memory space, POS7/6 is incremented, such that it points to the next location in the selected segment.

To access POS4 and POS3, POS7/6 is loaded with 0000 and POS4 and POS3 are addressed from the first bus.

Fig. 2 is a detailed schematic diagram of POS7 and POS6. Referring to this figure, POS 7 includes two 8 bit data latches 202 and 204. Latch 202 is clocked from a Register Load Clock signal from the first bus, or whenever one of the segments of the second memory space 124 are accessed from the first bus. Data from the first data bus 106 is loaded into latch 202 through AND gates 206 and OR gates 208 when POS7 is addressed. Similarly, data at the output of adder 210 is loaded into latch 202 through gates 212 when either POS4 or POS3 is addressed, the value of the data in POS7/6 is non-zero, and Auto Increment Enable ("AUTO INC EN") is enabled, as determined by AND gate 214 and OR gate 216. Auto Increment Enable is simply a bit in another register (POS5, which is not illustrated in the drawings) which can be set or cleared from first bus 102 and which is used to turn the auto increment feature ON and OFF. One input to Adder 210 comes from the output of latch 204, while the other input is the "carry input" from the "carry output" of POS6. Consequently, POS7 will only be incremented when POS6 contains FF. POS6 is similar in design to POS7 except that the "carry input" to adder 218 is set to logic one. Thus, POS6 will be incremented anytime one of the segments of the second memory space is accessed, assuming that Auto Increment is active.

There has been described extended addressing circuitry wherein a selected address within one of two segments of a memory space (124) of a second address/data bus (116), can be accessed from a first bus (102) through one of two data registers (136 and 138). In addition, the location of the two segments within the memory space of the second bus is selectable through two segment registers (148 and 150), which are accessed from the first bus through the first data register (136). A two byte wide "mode" register (126 and 128), which can be directly accessed from the first bus, stores data within three ranges. When the mode register data is within the first range; a selected segment register can be accessed through the first data register. A first value within this range selects the first segment register (148), while a second value selects the second segment register (150). Data loaded into the first and second segment registers points to first and second segments of the second memory space, respectively. When the mode register data is within the second range, this data functions as a pointer to select an address within a selected segment. The selected address is accessed through the data registers; the first data register (136) accessing the selected address in the first segment, while the second data register (138) accesses the selected address in the second segment. After a selected address has been accessed, an auto-increment circuit (Fig. 2) increments the mode register so that the next sequential address in the selected segment can be accessed without having to reload the mode register. When the mode register data is within the first range, the two data registers can be directly accessed from the first bus.

## Claims

1. Extended addressing circuitry, for use with first (102) and second (116) address/data buses having, respectively, first and second addressable memory spaces associated therewith, said extended addressing circuitry comprising in combination:
first (POS6, POS7) and second registers, said first register being capable of storing values of data that lie within first, second and third non-overlapping ranges;
means (152) for accessing said second register (SEG REG4) from said first bus in response to a first address signal (SEL POS4) on said first bus, said means for accessing said second register being enabled in response to a first predetermined value (FFF6) of data stored in said first register, said first predetermined value lying within said first range, whereby data may be transferred between said second register and said first bus when said second register is so accessed;
means (156,160) for selecting a first segment of said second memory space, the base address of said first segment corresponding to the data stored in said second register, said selecting means being enabled in response to a value of data stored in said first register that lies within said second range, and to said first address signal; and
means (162,164,166,168,170) for accessing a selected address of said first segment of said second memory space in response to said first address signal on said first bus, the address of said selected address within said first segment corresponding to the data stored in said first register, said means for accessing a selected address of said first segment being enabled in response to a value of data stored in said first register that lies within said second range, whereby data may be transferred between said selected address and said first bus when said selected address is so accessed.

2. Extended addressing circuitry as claimed in claim 1, further comprising:
a third register (SEG REG3);
means (154) for accessing said third register from said first bus in response to said first address signal on said first bus, said means for accessing said third data register being enabled in response to a second predetermined value (FFF5) of data stored in said first register, said second predetermined value lying within said first range, whereby data may be transferred between said third register and said first bus when said third register is so accessed; and
means (158,160) for selecting a second segment of said second memory space, the base address of said second segment corresponding to the data stored in said third register, said selecting means being enabled in response to a value of data stored in said first register that lies within said first or second ranges, and to a second address signal (SEL POS3).

3. Extended addressing circuitry as claimed in claim 2, further comprising:
means (162,164,166,168,170) for accessing a selected address of said second segment of said second memory space in response to said second address signal (SEL POS3) on said first bus, the address of said selected address within said second segment corresponding to the data stored in said first register, said means for accessing a selected address of said second segment being enabled in response to a value of data stored in said first register that lies within said first or second ranges, whereby data may be transferred between said selected address and said first bus when said selected address is so accessed.

4. Extended addressing circuitry as claimed in claim 3, further comprising:
fourth (POS4) and fifth (POS3) registers;
means (142) for accessing said fourth register (POS4) from said first bus in response to said first address signal (SEL POS4) on said first bus,
said means for accessing said fourth register being enabled in response to a third predetermined value (ALL ZEROS) of data stored in said first register, said third predetermined value lying within said third range, whereby data may be transferred between said fourth register and said first bus when said fourth register is so accessed; and
means (146) for accessing said fifth register from said first bus in response to said second address signal on said first bus, said means for accessing said fifth register being enabled in response to said third predetermined value of data stored in said first register, whereby data may be transferred between said fifth register and said first bus when said fifth register is so accessed.

5. Extended addressing circuitry as claimed in claim 2 or claim 3, further comprising:
a fourth register (POS4); and
means (142) for accessing said fourth register from said first bus in response to said first address signal on said first bus, said means for accessing said fourth register being enabled in response to a third predetermined value of data stored in said first register, said third predetermined value lying within said third range, whereby data may be transferred between said fourth register and said first bus when said fourth register is so accessed.

6. Extended addressing circuitry as claimed in claim 1, further comprising:
a third register (SEG REG3); and
means (154) for accessing said third register from said first bus in response to said first address signal on said first bus, said means for accessing said third register being enabled in response to a second predetermined value (FFF5) of data stored in said first register, said second predetermined value lying within said first range, whereby data may be transferred between said third register and said first bus when said third register is so accessed.

7. Extended addressing circuitry as claimed in any preceding claim, further comprising:
means for auto-incrementing said first register after an address of said second memory space has been accessed.

8. Adapter card comprising extended addressing circuitry as claimed in any preceding claim.

9. An adapter card (110) having extended addressing capability, said adapter card for use in a computer having a first address/data bus (102), said first address/data bus having a first memory space associated therewith, said adapter card comprising in combination:
a second address/data bus (116) having a second memory space associated therewith;
memory (122) coupled to said second bus, said memory being addressable within said second memory space;
means (172,174), coupled to the data bus of said second bus, for transferring data between said first and second buses;
first (POS6, POS7) and second (SEG REG4) registers, said first register being capable of storing values of data that lie within first, second and third non-overlapping ranges;
means (152) for accessing said second register from said first bus in response to a first address signal (SEL POS4) on said first bus, said means for accessing said second register being enabled in response to a first predetermined value (FFF6) of data stored in said first register, said first predetermined value lying within said first range, whereby data may be transferred between said second register and said first bus when said second register is so accessed;
means (156,160) for selecting a first segment of said memory, the base address of said first segment corresponding to the data being stored in said second register said selecting means being enabled in response to a value of data stored in said first register that lies within said second range, and to said first address signal (SEL POS4); and
means (162,164,166,168,170) for accessing a selected address of said first segment of said memory in response to said first address signal on said first bus, the address of said selected address within said first segment corresponding to the data stored in said first register, said means for accessing a selected address of said first segment being enabled in response to a value of data stored in said second register that lies within said second range, whereby data may be transferred between said selected address and said first bus when said selected address is so accessed.

10. Computer system comprising
first and second address/data buses having respectively, first and second addressable memory spaces associated therewith; and
extended addressing circuitry as claimed in any one of claims 1 to 7.

## Patentansprüche

1. Eine erweiterte Adressierungsschaltung zum Einsatz mit einem ersten (102) und einem zweiten (116) Adressen/Datenbus, denen entsprechende erste und zweite adressierbare Speicherräume zugeordnet sind, wobei die erweiterte Adressierungsschaltung beinhaltet eine Kombination von
ersten (POS6, POS7) und zweiten Registern, von denen das erste Register in der Lage ist, Datenwerte abzuspeichern, die in einem ersten, zweiten und dritten sich nicht überlappenden Bereich liegen;
Mittel (152) zum Zugreifen auf das zweite Register (SEG REG4) vom ersten Bus aus, als Reaktion auf ein erstes Adressensignal (SEL POS4) auf dem ersten Bus, das Mittel zum Zugriff auf das zweite Register aktiviert wird als Reaktion auf einen ersten vorgegebenen Wert (FFF6) der im ersten Register abgespeicherten Daten, wobei der erste vorgegebene Wert im ersten Bereich liegt, und wobei Daten zwischen dem zweiten Register und dem ersten Bus übertragen werden können, wenn auf das zweite Register auf diese Weise zugegriffen wird;
Mittel (156, 160) zum Anwählen eines ersten Segments des zweiten Speicherraums, wobei die Anfangsadresse des ersten Segments den Daten, die im zweiten Register gespeichert sind, entspricht, wobei das Wahlmittel als Reaktion auf einen Wert der im ersten Register abgespeicherten Daten, die in diesem zweiten Bereich liegen, und auf das erste Adressensignal aktiviert wird;
und Mittel (162, 164, 166, 168, 170) zum Zugreifen auf eine ausgewählte Adresse des ersten Segments des zweiten Speicherraums als Reaktion auf das erste Adressensignal auf dem ersten Bus, wobei die Adresse der gewählten Adresse im ersten Segment den im ersten Register gespeicherten Daten entspricht, das Zugriffsmittel zum Zugriff auf die angewählte Adresse im ersten Segment als Reaktion auf einen Wert von im ersten Register abgespeicherten Daten aktiviert wird, die im zweiten Bereich liegen, so daß Daten zwischen der gewählten Adresse und dem ersten Bus transportiert werden können, wenn auf die angewählte Adresse auf diese Weise Zugriff genommen wird.

2. Eine erweiterte Adressierungsschaltung gemäß Anspruch 1, die ferner aufweist:
ein drittes Register (SEG REG3);
Mittel (154) zum Zugreifen auf das dritte Register vom zweiten Bus aus, als Reaktion auf ein erstes Adressensignal auf dem ersten Bus; das Mittel zum Zugriff auf das dritte Register aktiviert wird als Reaktion auf einen zweiten vorgegebenen Wert (FFF5) der im ersten Register abgespeicherten Daten, wobei der zweite vorgegebene Wert im ersten Bereich liegt, und wobei Daten zwischen dem dritten Register und dem ersten Bus übertragen werden können, wenn auf das dritte Register auf diese Weise zugegriffen wird; und
Mittel (158, 160) zum Anwählen eines zweiten Segments des zweiten Speicherraums, wobei die Anfangsadresse des ersten Segments den Daten, die im dritten Register gespeichert sind, entspricht, wobei das Wahlmittel als Reaktion auf einen Wert von im ersten Register abgespeicherten Daten, die in diesem ersten oder zweiten Bereich liegen, und auf das erste oder das zweite Adressensignal (SEL POS3) aktiviert wird.

3. Eine erweiterte Adressierungsschaltung gemäß Anspruch 2, die ferner aufweist:
Mittel (162, 164, 166, 168, 170) zum Zugreifen auf eine angewählte Adresse des zweiten Segments des zweiten Speicherraums als Reaktion auf das zweite Adressensignal (SEL POS3) auf dem ersten Bus, wobei die Adresse der gewählten Adresse im zweiten Segment den im ersten Register gespeicherten Daten entspricht, das Zugriffsmittel zum Zugriff auf die angewählte Adresse im zweiten Segment als Reaktion auf einen Wert der im ersten Register abgespeicherten Daten aktiviert wird, das im ersten oder im zweiten Bereich liegt, wobei Daten zwischen der gewählten Adresse und dem ersten Bus übertragen werden können, wenn auf die angewählte Adresse auf diese Weise Zugriff genommen wird.

4. Eine erweiterte Adressierungsschaltung gemäß Anspruch 3, die ferner aufweist:
ein viertes (POS4) und ein fünftes (POS5) Register;
Mittel (142) zum Zugreifen auf das vierte Register (POS4) vom ersten Bus aus, als Reaktion auf ein erstes Adressensignal (SEL POS4) auf dem ersten Bus,
das Mittel zum Zugriff auf das vierte Register aktiviert wird als Reaktion auf einen dritten vorgegebenen Wert (ALL ZEROES) der im ersten Register abgespeicherten Daten, wobei der dritte vorgegebene Wert im dritten Bereich liegt, und wobei Daten zwischen dem vierten Register und dem ersten Bus übertragen werden können, wenn auf das vierte Register auf diese Weise zugegriffen wird; und
Mittel (146) zum Zugreifen auf das fünfte Register vom ersten Bus aus, als Reaktion auf das zweite Adressensignal auf dem ersten Bus, wobei das Mittel zum Zugriff auf das fünfte Register aktiviert wird als Reaktion auf den dritten vorgegebenen Wert der im ersten Register abgespeicherten Daten, wobei Daten zwischen dem fünften Register und dem ersten Bus übertragen werden können, wenn auf das fünfte Register auf diese Weise zugegriffen wird.

5. Eine erweiterte Adressierungsschaltung gemäß Anspruch 2 oder Anspruch 3, die ferner aufweist:
ein viertes (POS4) Register; und
Mittel (142) zum Zugreifen auf das vierte Register vom ersten Bus aus, als Reaktion auf das erste Adressensignal auf dem ersten Bus, das Mittel zum Zugriff auf das vierte Register aktiviert wird als Reaktion auf einen dritten vorgegebenen Wert der im ersten Register abgespeicherten Daten, wobei der dritte vorgegebene Wert im dritten Bereich liegt, und wobei Daten zwischen dem vierten Register und dem ersten Bus übertragen werden können, wenn auf das vierte Register auf diese Weise zugegriffen wird.

6. Eine erweiterte Adressierungsschaltung gemäß Anspruch 1, die ferner aufweist:
ein drittes (SEG REG 3) Register; und
Mittel (154) zum Zugreifen auf das dritte Register vom ersten Bus aus, als Reaktion auf das erste Adressensignal auf dem ersten Bus, das Mittel zum Zugriff auf das dritte Register aktiviert wird als Reaktion auf einen zweiten vorgegebenen Wert (FFF5) der im ersten Register abgespeicherten Daten, wobei der zweite vorgegebene Wert im ersten Bereich liegt, und wobei Daten zwischen dem dritten Register und dem ersten Bus übertragen werden können, wenn auf das vierte Register auf diese Weise zugegriffen wird.

7. Eine erweiterte Adressierungsschaltung gemäß einem beliebigen der vorstehenden Ansprüche, die ferner aufweist:
Mittel zur Selbstinkrementierung des ersten Registers nachdem auf eine Adresse im zweiten Speicherraum zugegriffen wurde.

8. Einer Adapterkarte, enthaltend eine erweiterte Adressierungsschaltung gemäß einem der vorstehenden Ansprüche.

9. Eine Adapterkarte (110) mit einer erweiterten Adressierungsfähigkeit, wobei die Adapterkarte zum Einsatz in einem Computer einen ersten Adressen/Datenbus (102) aufweist, diesem ersten Adressen/Datenbus ein erster Speicherraum zugeordnet ist, wobei diese Adapterkarte enthält eine Kombination von:
einem zweiten Adressen/Datenbus (116) mit einem zweiten zugeordneten Speicherraum;
einem Speicher (122), der mit dem zweiten Bus gekoppelt ist, wobei der Speicher innerhalb des zweiten Speicherraums adressierbar ist;
Mitteln (172, 174) mit dem Datenbus des zweiten Busses gekoppelt sind, um Daten zwischen dem ersten und dem zweiten Bus zu übertragen;
einem ersten (POS6, POS7) und einem zweiten (SEG REG4) Register, wobei das erste Register in der Lage ist, Datenwerte zu speichern die in ersten zweiten und dritten, sich nicht überlappenden Bereichen liegen;
Mitteln (152) zum Zugreifen auf das zweite Register vom ersten Bus aus, als Reaktion auf ein erstes Adressensignal (SEL POS4) auf dem ersten Bus, das Mittel zum Zugriff auf das zweite Register aktiviert wird als Reaktion auf einen ersten vorgegebenen Wert (FFF6) der im ersten Register abgespeicherten Daten, wobei der erste vorgegebene Wert im ersten Bereich liegt, und wobei Daten zwischen dem zweiten Register und dem ersten Bus übertragen werden können, wenn auf das zweite Register auf diese Weise zugegriffen wird;
Mitteln (156, 160) zum Anwählen eines ersten Segments des zweiten Speicherraums, wobei die Anfangsadresse des ersten Segments den im zweiten Register gespeicherten Daten entspricht, wobei das Wahlmittel als Reaktion auf einen Wert der im ersten Register abgespeicherten Daten, das in diesem zweiten Bereich liegt, und auf das erste Adressensignal (SEL POS4) aktiviert wird;
und Mitteln (162, 164, 166, 168, 170) zum Zugreifen auf eine ausgewählte Adresse des ersten Segments des zweiten Speicherraums als Reaktion auf das erste Adressensignal auf dem ersten Bus, wobei die Adresse der angewählten Adresse im ersten Segment den im ersten Register gespeicherten Daten entspricht, das Zugriffsmittel zum Zugriff auf die angewählte Adresse im ersten Segment als Reaktion auf einen Wert der im ersten Register abgespeicherten Daten aktiviert wird, das im zweiten Bereich liegt, so daß Daten zwischen der gewählten Adresse und dem ersten Bus transportiert werden können, wenn auf die angewählte Adresse auf diese Weise Zugriff genommen wird.

10. Computersystem, enthaltend
einen ersten und einen zweiten Adressen/Datenbus mit einem entsprechenden, ihnen zugeordneten ersten und zweiten adressierbaren Speicherraum; und
eine erweiterte Adressierungsschaltung gemäß einem der Ansprüche 1 bis 7.

## Revendications

1. Circuit d'adressage étendu, premier (102) et second (116) bus d'adresses/données comportant, respectivement, les premier et second espaces mémoire adressables associés à ceux-ci, ledit circuit d'adressage étendu comprenant en combinaison :
des premier (POS 6, POS 7) et second registres, ledit premier registre étant capable de mémoriser des valeurs de données qui résident à l'intérieur des première, seconde et troisième plages sans recouvrement,
un moyen (152) destiné à accéder audit second registre (SEG REG 4) à partir dudit premier bus en réponse à un premier signal d'adresse (SEL POS 4) sur ledit premier bus, ledit moyen destiné à accéder audit second registre étant validé en réponse à une première valeur prédéterminée (FFF6) de données mémorisée dans ledit premier registre, ladite première valeur prédéterminée résidant à l'intérieur de ladite première plage, d'où il résulte que des données peuvent être transférées entre ledit second registre et ledit premier bus lorsque l'on accède ainsi audit second registre,
un moyen (156,160) destiné à sélectionner un premier segment dudit second espace mémoire, l'adresse de base dudit premier segment correspondant aux données mémorisées dans ledit second registre, ledit moyen de sélection étant validé en réponse à une valeur de données mémorisée dans ledit premier registre qui réside à l'intérieur de ladite seconde plage, et audit premier signal d'adresse, et
un moyen (162, 164, 166, 168, 170) destiné à accéder à une adresse sélectionnée dudit premier segment dudit second espace mémoire en réponse audit premier signal d'adresse sur ledit premier bus, l'adresse de ladite adresse sélectionnée à l'intérieur dudit premier segment correspondant aux données mémorisées dans ledit premier registre, ledit moyen destiné à accéder à une adresse sélectionnée dudit premier segment étant validé en réponse à une valeur de données mémorisée dans ledit premier registre qui réside à l'intérieur de ladite seconde plage, d'où il résulte que des données peuvent être transférées entre ladite adresse sélectionnée et ledit premier bus lorsque l'on accède ainsi à ladite adresse sélectionnée.

2. Circuit d'adressage étendu selon la revendication 1, comprenant en outre :
un troisième registre (SEG REG 3),
un moyen (154) destiné à accéder audit troisième registre à partir dudit premier bus en réponse audit premier signal d'adresse sur ledit premier bus, ledit moyen destiné à accéder audit troisième registre de données étant validé en réponse à une seconde valeur prédéterminée (FFF5) de données mémorisée dans ledit premier registre, ladite seconde valeur prédéterminée résidant à l'intérieur de ladite première plage, d'où il résulte que des données peuvent être transférées entre ledit troisième registre et ledit premier bus lorsque l'on accède ainsi audit troisième registre, et
un moyen (158,160) destiné à sélectionner un second segment dudit second espace mémoire, l'adresse de base dudit second segment correspondant aux données mémorisées dans ledit troisième registre, ledit moyen de sélection étant validé en réponse à une valeur de données mémorisée dans ledit premier registre qui réside à l'intérieur desdites première ou seconde plages, et à un second signal d'adresse (SEL POS 3).

3. Circuit d'adressage étendu selon la revendication 2, comprenant en outre :
un moyen (162, 164, 166, 168, 170) destiné à accéder à une adresse sélectionnée dudit second segment dudit second espace mémoire en réponse audit second signal d'adresse (SEL POS 3) sur ledit premier bus, l'adresse de ladite adresse sélectionnée à l'intérieur dudit second segment correspondant aux données mémorisées par ledit premier registre, ledit moyen destiné à accéder à une adresse sélectionnée dudit second segment étant validé en réponse à une valeur de données mémorisée dans ledit premier registre qui réside à l'intérieur desdites première ou seconde plages, d'où il résulte que des données peuvent être transférées entre ladite adresse sélectionnée et ledit premier bus lorsque l'on accède ainsi à ladite adresse sélectionnée.

4. Circuit d'adressage étendu selon la revendication 3, comprenant en outre :
des quatrième (POS 4) et cinquième (POS 3) registres,
un moyen (142) destiné à accéder audit quatrième registre (POS 4) à partir dudit premier bus en réponse audit premier signal d'adresse (SEL POS 4) sur ledit premier bus,
ledit moyen destiné à accéder audit quatrième registre étant validé en réponse à une troisième valeur prédéterminée (constituée uniquement de zéros) de données mémorisée dans ledit premier registre, ladite troisième valeur prédéterminée résidant à l'intérieur de ladite troisième plage, d'où il résulte que des données peuvent être transférées entre ledit quatrième registre et ledit premier bus lorsque l'on accède ainsi audit quatrième registre, et
un moyen (146) destiné à accéder audit cinquième registre à partir dudit premier bus en réponse audit second signal d'adresse sur ledit premier bus, ledit moyen destiné à accéder audit cinquième registre étant validé en réponse à ladite troisième valeur prédéterminée de données mémorisée dans ledit premier registre, d'où il résulte que des données peuvent être transférées entre ledit cinquième registre et ledit premier bus lorsque l'on accède ainsi audit cinquième registre.

5. Circuit d'adressage étendu selon la revendication 2 ou la revendication 3 comprenant en outre :
un quatrième registre (POS 4), et
un moyen (142) destiné à accéder audit quatrième registre à partir dudit premier bus en réponse audit premier signal d'adresse sur ledit premier bus, ledit moyen destiné à accéder audit quatrième registre étant validé en réponse à une troisième valeur prédéterminée de données mémorisées dans ledit premier registre, ladite troisième valeur prédéterminée résidant à l'intérieur de ladite troisième plage, d'où il résulte que des données peuvent être transférées entre ledit quatrième registre et ledit premier bus lorsque l'on accède ainsi audit quatrième registre.

6. Circuit d'adressage étendu selon la revendication 1, comprenant en outre :
un troisième registre (SEG REG 3), et
un moyen (154) destiné à accéder audit troisième registre à partir dudit premier bus en réponse audit premier signal d'adresse sur ledit premier bus, ledit moyen destiné à accéder audit troisième registre étant validé en réponse à une seconde valeur prédéterminée (FFF5) de données mémorisée dans ledit premier registre,
ladite seconde valeur prédéterminée résidant à l'intérieur de ladite première plage, d'où il résulte que des données peuvent être transférées entre ledit troisième registre et ledit premier bus lorsque l'on accède ainsi audit troisième registre.

7. Circuit d'adressage étendu selon toute revendication précédente quelconque, comprenant en outre :
un moyen destiné à auto-incrémenter ledit premier registre après que l'on ait accédé à une adresse dudit second espace mémoire.

8. Carte d'adaptateur comprenant un circuit d'adressage étendu selon toute revendication précédente quelconque.

9. Carte d'adaptateur (110) comportant des possibilités d'adressage étendu, ladite carte d'adaptateur étant destinée à être utilisée dans un ordinateur comprenant un premier bus d'adresses/données (102), ledit premier bus d'adresses/données ayant un premier espace mémoire associé à celui-ci, ladite carte d'adaptateur comprenant en combinaison :
un second bus d'adresses/données (116) ayant un second espace mémoire associé à celui-ci,
une mémoire (122) reliée audit second bus, ladite mémoire étant adressable à l'intérieur dudit second espace mémoire,
un moyen (172, 174), relié au bus de données dudit second bus, afin de transférer des données entre lesdits premier et second bus,
des premier (POS 6, POS 7) et second (SEG REG 4) registres, ledit premier registre étant capable de mémoriser les valeurs de données qui résident à l'intérieur des première, seconde et troisième plages sans recouvrement,
un moyen (152) destiné à accéder audit second registre à partir dudit premier bus en réponse à un premier signal d'adresse (SEL POS 4) sur ledit premier bus, ledit moyen destiné à accéder audit second registre étant validé en réponse à une première valeur prédéterminée (FFF6) de données mémorisée dans ledit premier registre, ladite première valeur prédéterminée résidant à l'intérieur de ladite première plage, d'où il résulte que des données peuvent être transférées entre ledit second registre et ledit premier bus lorsque l'on accède ainsi audit second registre,
un moyen (156, 160) destiné à sélectionner un premier segment de ladite mémoire, l'adresse de base dudit premier segment correspondant aux données qui sont mémorisées dans ledit second registre, ledit moyen de sélection étant validé en réponse à une valeur de données mémorisées dans ledit premier registre qui réside à l'intérieur de ladite seconde plage, et audit premier signal d'adresse (SEL POS 4), et
un moyen (162, 164, 166, 168, 170) destiné à accéder à une adresse sélectionnée dudit premier segment de ladite mémoire en réponse audit premier signal d'adresse sur ledit premier bus, l'adresse de ladite adresse sélectionnée à l'intérieur dudit premier segment correspondant aux données mémorisées dans ledit premier registre, ledit moyen destiné à accéder à une adresse sélectionnée dudit premier segment étant validé en réponse à une valeur de données mémorisée dans ledit second registre qui réside à l'intérieur de ladite seconde plage, d'où il résulte que des données peuvent être transférées entre ladite adresse sélectionnée et ledit premier bus lorsque l'on accède ainsi à ladite adresse sélectionnée.

10. Système d'ordinateur comprenant
des premier et second bus d'adresses/données comportant respectivement des premier et second espaces mémoire adressables associés à ceux-ci, et
un circuit d'adressage étendu selon l'une quelconque des revendications 1 à 7.
